# EUROPEAN PATENT APPLICATION

(11) **EP 4 659 836 A1**
(43) Date of publication of application: **10.12.2025**
(21) Application number: 24750222.2
(22) Date of filing: 29.01.2024
(51) Int. Cl.: B01D 46/52

(54) **AIR FILTER**

(30) Priority: 01.02.2023 JP 2023014233
(71) Applicant: Nippon Muki Co., Ltd., Taitou-ku Tokyo 110-0015 (JP)
(72) Inventor: SEKI, Kazuya, Yuki-shi Ibaraki 307-0046 (JP); HAYASHI, Shiro, Yuki-shi Ibaraki 307-0046 (JP)
(74) Representative: Körfer, Thomas
(86) International application number: PCT/JP2024/002697
(87) International publication number: WO 2024/162273

(57) **Abstract**

[Problem] To provide an air filter capable of improving the cleanliness of blown-out air.

[Solution] A filter pack 10 in a rectangular parallelepiped shape that has a filter medium folded in a zigzag pattern, and has two sets of pairs of peripheral surfaces 10b perpendicular to ventilation surfaces 10a of airflow, a filter frame that surrounds the peripheral surfaces and houses the filter pack 10, and a sealing material 40 made of glass fibers disposed between at least one of the pair of peripheral surfaces 10b and the filter frame are included. The filter frame that surrounds the at least one of the pair of peripheral surfaces 10b includes a base portion 21a that faces the peripheral surface 10b, an upstream side rising portion 21b that rises parallel to the ventilation surfaces 10a from an edge on an upstream side in the airflow direction of the base portion 21a, and a downstream side rising portion 21c that rises parallel to the ventilation surfaces 10a from an edge on a downstream side in the airflow direction of the base portion 21a and has a larger rising amount than the upstream side rising portion 21b.

## Description

### Technical Field

The present invention relates to an air filter.

### Background Art

Conventionally, in an air filter used in a high temperature range, a sealing material formed of glass fibers may be used from the viewpoint of heat resistance.

### Citation List

### Patent Literature

PTL 1: JP2005-238215A

### Summary of Invention

### Technical Problem

However, when a load larger than the final filter pressure is applied due to uneven flow or turbulence at the time of use of an air filter, a filter pack may rub against a sealing material formed of glass fibers, causing the glass fibers to break to generate pieces. When the pieces are generated upstream of the filter, the pieces are captured by the filter pack, but when the pieces are generated downstream of the filter, the clean space may be contaminated.

The invention has been made in consideration of the above circumstances, and an object of the invention is to provide an air filter capable of improving the cleanliness of blown-out air.

### Solution to Problem

In order to solve the above problem, an air filter according to the invention includes a filter pack in a rectangular parallelepiped shape that has a filter medium folded in a zigzag pattern, and has two sets of pairs of peripheral surfaces perpendicular to ventilation surfaces of airflow, a filter frame that surrounds the peripheral surfaces and houses the filter pack, and a sealing material made of glass fibers disposed between at least one of the pair of peripheral surfaces and the filter frame, in which the filter frame that surrounds the at least one of the pair of peripheral surfaces includes a base portion that faces the peripheral surface, an upstream side rising portion that rises parallel to the ventilation surfaces from an edge on an upstream side in the a direction of the airflow of the base portion, and a downstream side rising portion that rises parallel to the ventilation surfaces from an edge on a downstream side in the direction of the airflow of the base portion and has a larger rising amount than the upstream side rising portion.

### Advantageous Effects of Invention

In the air filter according to the invention, the cleanliness of blown-out air can be improved.

### Brief Description of Drawings

[FIG. 1] FIG. 1 is a front view of an air filter according to the present embodiment.
[FIG. 2] FIG. 2 is a cross-sectional view taken along line II-II in FIG. 1.
[FIG. 3] FIG. 3 is an enlarged cross-sectional view particularly illustrating a frame plate and a plate material.
[FIG. 4] FIG. 4 is a cross-sectional view of the plate material and a sealing material.
[FIG. 5] FIG. 5 is a plan view of the plate material seen from the direction facing a plate material base portion.

### Description of Embodiments

The air filter of the invention will be described with reference to the drawings. The air filter according to the invention is used, for example, for cleaning circulating air in a dryer or the like or for treating exhaust gas from an incinerator, and can be applied as an air filter having heat resistance that can be used even in a high temperature range. Further, the air filter according to the invention can also be used for an air purifier for a semiconductor, food, a hospital, or the like at room temperature or in a relatively low temperature range.

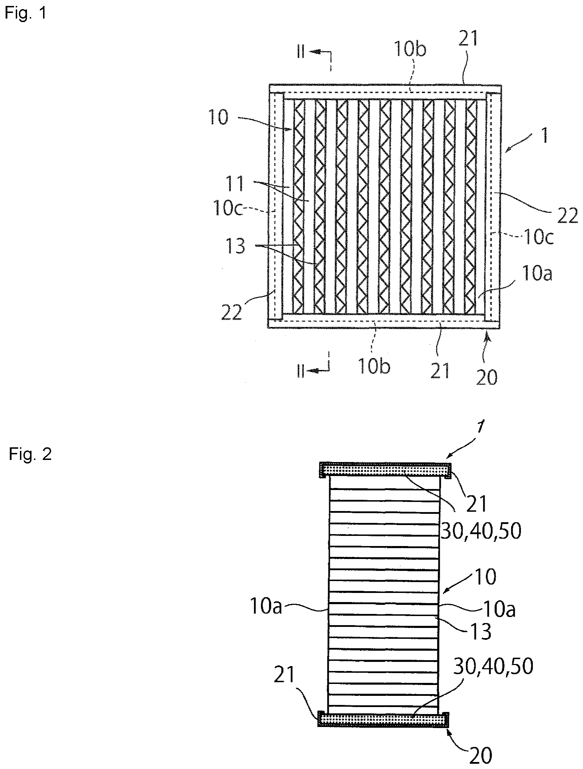

FIG. 1 is a front view of an air filter 1 according to the present embodiment.

FIG. 2 is a cross-sectional view taken along line II-II in FIG. 1.

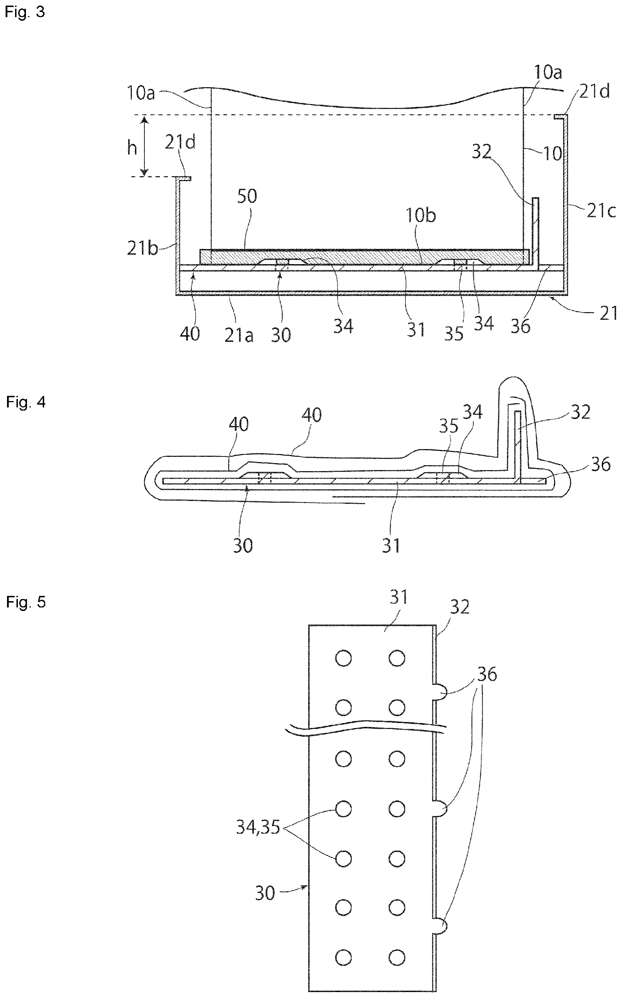

FIG. 3 is an enlarged cross-sectional view particularly illustrating a frame plate 21 and a plate material 30.

FIG. 4 is a cross-sectional view of the plate material 30 and a sealing material 40.

FIG. 5 is a plan view of the plate material 30 seen from the direction facing a plate material base portion 31.

The air filter 1 mainly includes a filter pack 10, a filter frame 20, a plate material 30, a sealing material 40, and a ceramic layer 50. The filter pack 10 has a rectangular parallelepiped shape (for example, 580 mm x 580 mm x 125 mm). The filter pack 10 has a pair of ventilation surfaces 10a of airflow and two sets of pairs of peripheral surfaces 10b and 10c perpendicular to the ventilation surfaces 10a. The filter pack 10 has a filter medium 11 and a separator 13.

The filter medium 11 is formed of a filter paper made of inorganic fibers, in which inorganic fibers are bound together with, for example, an organic binder. As the filter medium 11, for example, a filter medium for HEPA or ULPA, such as a glass fiber paper produced by a papermaking method in which ultrafine glass fibers are bound with an organic binder can be used. The filter material 11 is folded in a zigzag pattern.

The separator 13 is disposed in a space formed by folding the filter media 11 and maintains the spacing of the space formed by folding. The separator 13 is formed of, for example, an aluminum alloy, a stainless steel foil, or the like having a corrugated shape. The separator 13 is disposed in the space formed by folding so that, for example, the corrugated ridges of the separator 13 are parallel to the airflow direction.

The filter frame 20 surrounds the four peripheral surfaces 10b and 10c of the filter pack 10 to house the filter pack 10. The filter frame 20 is formed by combining two sets of pairs of frame plates 21 and 22. The frame plates 21 and 22 have a predetermined thickness (for example, 1 mm), and are formed of, for example, a metal such as an aluminum alloy, a stainless steel such as SUS430, or a steel plate to be formed into a U-shaped cross section.

As shown in FIG. 3, a pair of frame plates 21 is disposed on the side of the peripheral surface 10b of the filter pack 10 on which the zigzag pattern appears (the filter frame 20 surrounding at least one of the pair of peripheral surfaces 10b) has a frame plate base portion 21a, an upstream side rising portion 21b, and a downstream side rising portion 21c.

The frame plate base portion 21a (base portion) is a portion facing the peripheral surface 10b (facing via the plate material 30 and the sealing material 40). The upstream side rising portion 21b and the downstream side rising portion 21c are portions facing substantially parallel to the ventilation surfaces 10a. The upstream side rising portion 21b rises at a right angle from an edge on the upstream side in the airflow direction of the frame plate base portion 21a. The downstream side rising portion 21c rises at a right angle from an edge on the downstream side in the airflow direction of the frame plate base portion 21a. The downstream side rising portion 21c has a larger rising amount than the rising amount (for example, 14 mm) of the upstream side rising portion 21b. That is, as shown in FIG. 3, the downstream side rising portion 21c rises larger than the upstream side rising portion 21b by a distance h (for example, 10 mm). The upstream side rising portion 21b and the downstream side rising portion 21c regulate the movement of the filter pack 10 to the outside of the filter frame 20 with respect to the airflow direction. Further, the upstream side rising portion 21b and the downstream side rising portion 21c have a folded portion 21d folded back by a predetermined amount (for example, 4 mm) toward the ventilation surface 10a at the tip portion (the open end of the U-shaped cross section).

The other pair of frame plates 22 have the same configuration as the frame plates 21, and therefore detailed description thereof will be omitted. In the frame plate 22, the rising amounts of the portions corresponding to the upstream side rising portion 21b and the downstream side rising portion 21c may be different like the frame plate 21, or may be the same.

The plate material 30 is disposed between the frame plate base portion 21a and the peripheral surface 10b of the filter pack 10. The plate material 30 is a plate-shaped member formed of, for example, an aluminum alloy or a stainless steel. The plate material 30 has the plate material base portion 31, a stopper 32, a protrusion 34, and a contact piece 36.

The plate material base portion 31 is a plate-like member having a dimension (area) larger than the peripheral surface 10b. The stopper 32 is formed by rising from an end on the downstream side in the airflow direction of the plate material base portion 31 by a predetermined amount (for example, 7 mm), and supports the filter pack 10 and prevents movement to downstream. The stopper 32 is formed between the downstream side rising portion 21c and the ventilation surface 10a on the downstream side of the filter pack 10 so as to be parallel to the ventilation surface 10a. The shape of the stopper 32 is not particularly limited as long as it can prevent the filter pack 10 from moving. The stopper 32 is formed, for example, by welding or adhering to the plate material base portion 31 or by cutting and raising (bending) a portion of the plate material base portion 31.

The stopper 32 may be in contact with the downstream side rising portion 21c of the frame plate 21 parallel to the stopper 32, or may be disposed with a predetermined gap therebetween as shown in FIG. 3. The arrangement with a gap provides play for slight movement of the filter pack 10 and can alleviate the impact when the filter pack 10 comes into contact with the stopper 32.

The stopper 32 is lower in height than the downstream side rising portion 21c. This can prevent deterioration in appearance due to protrusion from the downstream side rising portion 21c when the stopper 32 (and the sealing material 40) is visible from the downstream side.

The protrusion 34 is a portion that protrudes from the plate material base portion 31 toward the peripheral surface 10b by a predetermined amount (for example, 1 mm), and a required number of protrusions 34 are provided on the plate material base portion 31. The protrusion 34 is formed, for example, by bulging when a punching hole 35 to be formed in the plate material base portion 31 is formed from a surface on the opposite side to a surface facing the peripheral surface 10b, and may also include a burr portion.

The contact piece 36 is disposed at an end on the downstream side in the airflow direction of the plate material base portion 31, and is a portion that protrudes on the downstream side from the plate material base portion 31 with respect to the boundary between the stopper 32 and the plate material base portion 31. For example, a portion on the downstream side of the plate material base portion 31 is cut and raised to function as the stopper 32, and the remainder is left flush with the plate material base portion 31 without being raised, thereby forming the contact piece 36. The contact piece 36 has a length corresponding to the required dimension of the gap between the stopper 32 and the downstream side rising portion 21c to form the gap between the stopper 32 and the downstream side rising portion 21c. The contact piece 36 supports the load applied to the stopper 32 from the filter pack 10 together with the downstream side rising portion 21c.

The sealing material 40 is disposed between the peripheral surface 10b (at least one of the pair of peripheral surfaces 10b) and the filter frame 20 (frame plate 21). The sealing material 40 is, for example, a sheet-like sealing material 40 that is disposed so that the plate material 30 is wrapped with the sealing material 40 as shown in FIG. 4. The sealing material 40 wraps the plate material 30 by superimposing two sheets of the sealing material 40. In this case, it is preferable that the sealing material 40 is wound around the plate material 30 so that the surface of the plate material 30 does not protrude by folding the ends of the sheets of the sealing material 40 over each other. Such a sealing material 40 can seal the gap between the plate material 30 and the frame plate 21, and the gap between the plate material base portion 31 and the peripheral surface 10b.

The sealing material 40 is, for example, a sheet-like member made of ultrafine glass fibers. The sheet-like member is formed of, for example, inorganic fibers having a thickness of 0.5 to 2 mm, a basis weight of 20 to 30 g/m², and a density of 20 to 120 kg/m³. Further, the sheet-like member can be made by, for example, spinning and collecting ultrafine glass fibers having an average fiber diameter of 1 µm or less without using a binder. This sealing material 40 can be used as a sealing material having a basis weight of 80 to 120 g/m² by laminating a plurality of sheets. If the density of the sealing material 40 exceeds 120 kg/m³, the absorption performance of the expansion of a metal used in the filter frame 20, the separator 13, or the like may be deteriorated. In addition, the load per unit area of the filter pack 10 becomes large, which may cause deformation of the filter pack 10. If the density is less than 20 kg/m³, the force pressing down on the filter pack 10 is small, which may cause leakage. In addition, if the average fiber diameter exceeds 1 µm, the fibers will not fit the zigzag end of the filter medium 11 that forms the peripheral surface 10b, and the sealing performance may be insufficient.

The ceramic layer 50 (fixing member) is a clay-like member that is disposed between the sealing material 40 and the peripheral surface 10b and fixes the filter pack 10 and the sealing material 40. The ceramic layer 50 also complements the sealing performance between the sealing material 40 and the filter pack 10. Specifically, in order to prevent air from passing through the sealing material 40 without flowing through the ventilation surface 10a and directly flowing to downstream, the ceramic layer 50 blocks the flow of such air. The protrusion 34 is disposed between the sealing material 40 and the frame plate base portion 21a and protrudes so as to cause the sealing material 40 to bulge toward the peripheral surface 10b, and thus the ceramic layer 50 is pressed by the protrusion 34 via the sealing material 40. As a result, the ceramic layer 50 indirectly fixes the filter pack 10 fixed with the ceramic layer 50 and the plate material 30, thereby preventing movement (shift) in the airflow direction between the filter pack 10 and the plate material 30.

Such an air filter 1 in the embodiment receives a force in the airflow direction when air flows therethrough from the ventilation surface 10a at the time of use of the air filter 1. This may cause the filter pack 10 to shift to downstream. At this time, since glass fibers are used as the sealing material 40, the sealing material 40 is rubbed and scraped off due to the shifting of the filter pack 10, and cotton-like pieces may unintentionally be generated from the sealing material 40. It is necessary to prevent such pieces from flowing out to downstream where clean air is supplied without passing through the filter pack 10.

Therefore, in the air filter 1 in the embodiment, the rising amount of the downstream side rising portion 21c of the frame plate 21 is made larger than the normal rising amount (the rising amount of the upstream side rising portion 21b) by a distance h. As a result, even if cotton-like pieces are generated, the downstream side rising portion 21c acts as a wall so that the cotton-like pieces can be prevented from flowing out to downstream. Therefore, the air filter 1 in the embodiment can improve the cleanliness of the blown-out air. In addition, in a case where the air filter 1 is disposed so that the upstream side of the ventilation surface 10a faces upward and the downstream side faces downward, when cotton-like pieces generated from the sealing material 40 fall due to gravity, the downstream side rising portion 21c can dam the cotton-like pieces downstream, and therefore the cleanliness of the blown-out air can be improved.

Further, the air filter 1 includes the ceramic layer 50, and therefore can fix the sealing material 40 and the filter pack 10 while improving the airtightness. This allows the air filter 1 to reduce rubbing due to shift of the filter pack 10 and the sealing material 40 when the air filter 1 is used or transported, and to reduce the generation of cotton-like pieces.

Further, since the air filter 1 has the protrusion 34, the sealing material 40 disposed between the protrusion 34 and the ceramic layer 50 is sandwiched and fixed by utilizing the close contact of the protrusion 34 with the ceramic layer 50. This can reduce the shift of the sealing material 40 with respect to the filter pack 10, and can further reduce the generation of cotton-like pieces.

Still further, the air filter 1 has the stopper 32. This prevents downstream movement of the filter pack 10 to prevent shift of the filter pack 10 and the sealing material 40 and can reduce the generation of cotton-like pieces.

Although several embodiments of the invention have been described, these embodiments are presented by way of example and are not intended to limit the scope of the claims. These novel embodiments can be embodied in various other forms, and various omissions, substitutions, and modifications can be made without departing from the gist of the invention. These embodiments and their variations are included in the scope and gist of the invention, and are included in the scope of the invention and its equivalents described in the claims.

For example, although a description has been made using an example in which the protrusion 34 and the stopper 32 are disposed on the plate material 30, these members may be disposed directly on the frame plate base portion 21a of the frame plate 21.

Although the sealing material 40 has been described using an example in which the sealing material 40 is disposed so as to wrap the plate material 30, any sealing material may be employed as long as it is disposed between the frame plate 21 and the peripheral surface 10b of the filter pack 10.

Although a description has been made using an example in which the fixing member that is disposed between the sealing material and the peripheral surface and fixes the filter pack and the sealing material is the ceramic layer 50, the fixing member may be a glass fiber layer, a silicone layer, or the like other than the ceramic layer 50.

### Reference Signs List

1: air filter
10: filter pack
10a: ventilation surface
10b, 10c: peripheral surface
11: filter medium
13: separator
20: filter frame
21, 22: frame plate
21a: frame plate base portion
21b: upstream side rising portion
21c: downstream side rising portion
21d: folded portion
30: plate material
31: plate material base portion
32: stopper
34: protrusion
35: punching hole
36: contact piece
40: sealing material
50: ceramic layer

## Claims

1. An air filter, comprising:
a filter pack in a rectangular parallelepiped shape that has a filter medium folded in a zigzag pattern, and has two sets of pairs of peripheral surfaces perpendicular to ventilation surfaces of airflow;
a filter frame that surrounds the peripheral surfaces and houses the filter pack; and
a sealing material made of glass fibers disposed between at least one of the pair of peripheral surfaces and the filter frame, wherein
the filter frame that surrounds the at least one of the pair of peripheral surfaces includes:
a base portion that faces the peripheral surface;
an upstream side rising portion that rises parallel to the ventilation surfaces from an edge on an upstream side in a direction of the airflow of the base portion; and
a downstream side rising portion that rises parallel to the ventilation surfaces from an edge on a downstream side in the direction of the airflow of the base portion and has a larger rising amount than the upstream side rising portion.

2. The air filter according to claim 1, further comprising a stopper between the downstream side rising portion and the ventilation surface on the downstream side of the filter pack, the stopper being parallel to the ventilation surface.

3. The air filter according to claim 2, further comprising:
a fixing member that is disposed between the sealing material and the peripheral surface and fixes the filter pack and the sealing material; and
a protrusion that is disposed between the sealing material and the base portion, and prevents movement of the filter pack in the direction of the airflow by protruding toward the peripheral surface and pressing the fixing member.

4. The air filter according to claim 3, further comprising a plate material that has the protrusion and the stopper and is disposed between the peripheral surface and the base portion.
